# EUROPEAN PATENT APPLICATION

(11) **EP 4 506 051 A1**
(43) Date of publication of application: **12.02.2025**
(21) Application number: 24188577.1
(22) Date of filing: 15.07.2024
(51) Int. Cl.: B01D 39/16

(54) **TUBULAR FILTER WITH NONWOVEN MEDIA AND METHOD**

(30) Priority: 09.08.2023 US 202318232274
(71) Applicant: JONELL FILTRATION PRODUCTS, INC., Breckenridge, TX 76424 (US)
(72) Inventor: Cho, Donald, Carrollton (Texas), Texas 75010 (US); Clarke, Alan Lee, Mineral Wells, Texas 76067 (US); Weddle, Dwayne Austin, Graham, Texas 76450 (US)
(74) Representative: Soler Lerma, Santiago

(57) **Abstract**

A filter cartridge is provided that includes a plurality of individual fibers, wherein the individual fibers have different cross sections and are arranged into a random lattice of fibers. The filter cartridge also includes at least one flat sheet media, wherein the plurality of individual fibers are thermally bound to the at least one flat sheet media, wherein the flat sheet media is spirally wound to create a cylindrical profile.

## Description

### RELATED APPLICATIONS AND INCORPORATION BY REFERENCE

This application claims benefit of and priority to U.S. Non-Provisional Patent Application No. 18/232,274 filed August 9, 2023.

### FIELD OF THE DISCLOSURE

The present disclosure generally relates to filtration media technology for use in various industrial applications.

### BACKGROUND OF THE INVENTION

Filtration media technology is widely used in a variety of industrial applications, including, but not limited to, the oil and gas industries. Filters are generally elongated in shape with an entrance end and an exit end. A gas or liquid flows through the filter and various contaminants such as dirt are captured by various media within the filter housing and therefore removed from the gas or liquid stream.

While the shape and basic function of filters are fairly consistent across various filter types, the media that actually filters the gas or liquid flow varies widely. These variations depend on materials, manufacturing processes, and arrangement of the media.

There continues to be a need for improvement in filtration performance (e.g., the amount of contaminants collected by the filter and flow rate of liquids and gases through the filter) as well as a need for improved strength and rigidity of the elongated filters themselves.

### BRIEF SUMMARY OF THE INVENTION

In one aspect of the present disclosure, a filter cartridge is provided. The filter cartridge comprises a plurality of individual fibers, wherein some of the individual fibers comprise a lobal cross section, and others comprise a circular cross section. The filter cartridge further comprises at least one flat sheet media, wherein the plurality of individual fibers are thermally bound to the at least one flat sheet media, wherein the flat sheet media is spirally wound to create a cylindrical profile.

In another aspect of the present disclosure, a method of manufacturing a filter is provided. The method includes mixing a plurality of individual filtration fibers to form a flat sheet media and winding the flat sheet media into a spiral shape. The method further includes binding the plurality of individual filtration fibers to the flat sheet media using heat during the step of winding the flat sheet media.

### BRIEF DESCRIPTION OF THE DRAWINGS

The disclosure will be more readily understood in view of the following description when accompanied by the below figures and wherein like reference numerals represent the elements, wherein:
FIG. 1 is an image of a filter cartridge.
FIG. 2A is a cross-sectional image of a flat sheet media comprised of fibers having a circular cross section.
FIG. 2B is a cross-sectional image of a flat sheet media comprised of fibers having a lobal cross section.
FIG. 2C is a cross-sectional image of a flat sheet media comprised of fibers having a circular cross section and fibers having a lobal cross section.
FIG. 3A is an image of a plurality of filter media fibers that are not thermally bonded together.
FIG. 3B is an image of a plurality of filter media fibers that are thermally bonded together.
FIG. 4 is an embodiment of a filter cartridge with multiple layers.

### DETAILED DESCRIPTION OF THE INVENTION

The following disclosure as a whole may be best understood by reference to the provided detailed description when read in conjunction with the accompanying drawings, drawing description, abstract, background, field of the disclosure, and associated headings. Identical reference numerals when found on different figures identify the same elements or a functionally equivalent element. The elements listed in the abstract are not referenced but nevertheless refer by association to the elements of the detailed description and associated disclosure.

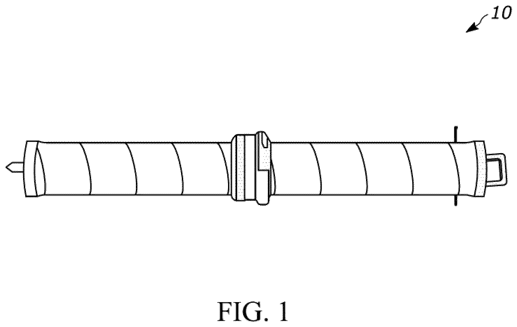

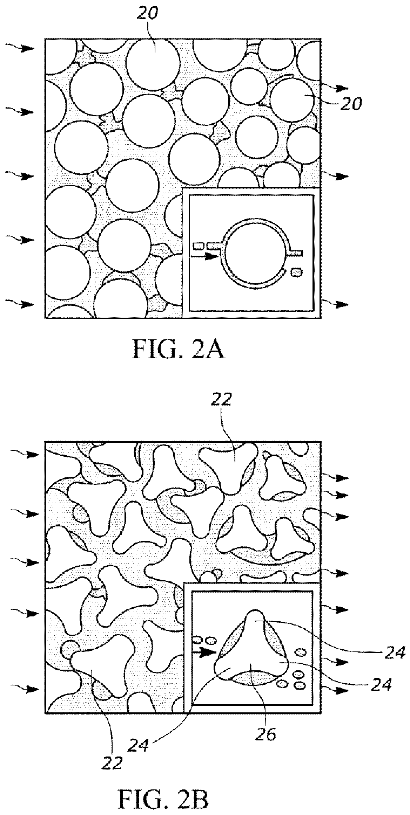

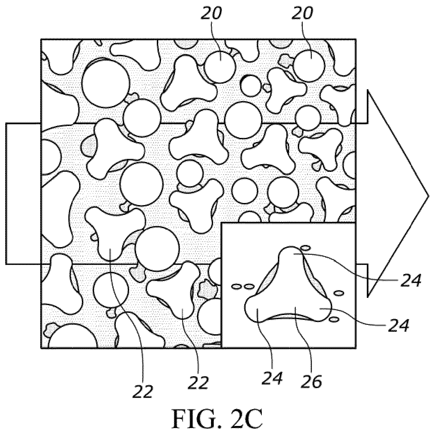

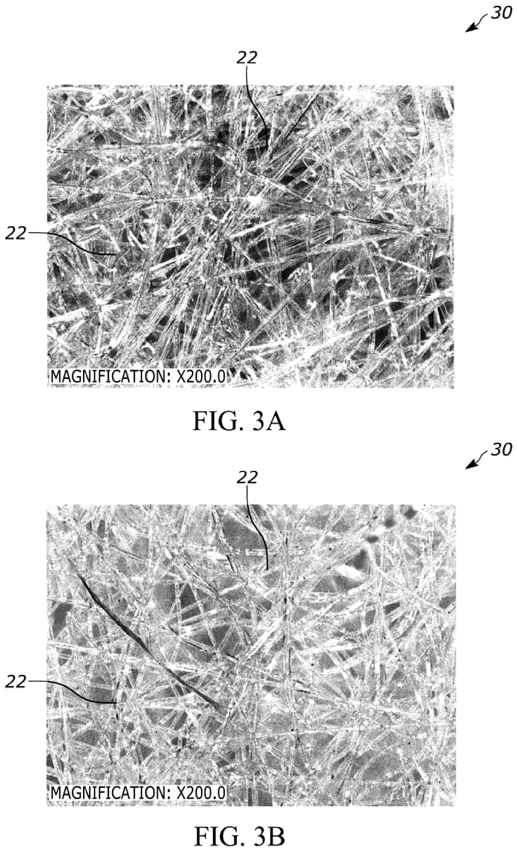

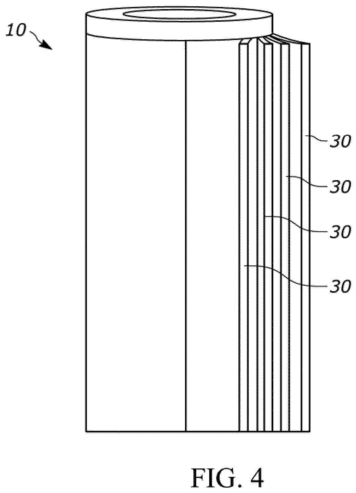

FIG. 1 shows an elongated filter cartridge 10. The elongated filter cartridge 10 may include multiple layers of non-woven filtration media 30 (shown, for example, in FIG. 4) made up of individual fibers 20 (in FIG. 2A) or 22 (in FIG. 2B), or a combination of both fibers 20, 22 (in FIG. 2C). FIGS. 3A and 3B show one such layer 30 of non-woven filtration media made up of a plurality of individual fibers 22. FIG. 3A show the plurality of individual fibers 22 prior to the fibers 22 being thermally bonded together while FIG. 3B shows the plurality of individual fibers 22 after the fibers 22 are thermally bonded together.

FIGs. 2A-2C depict cross-sectional images of a plurality of fibers 20, 22 as well as the flow of liquid and gases through the filter (from left to right). The plurality of fibers 20, 22 are comprised of polyethylene bicomponent fibers and staple fibers. Each of the bicomponent fibers and the staple fibers have an average diameter of approximately 10-90 microns and an average length of approximately 1.5-2.0 inches. The staple fibers have a melting point of about 400 degrees Fahrenheit and the bicomponent fibers comprise a polyethylene sheath having a melting point of about 230 degrees Fahrenheit.

Traditionally, filtration devices have used fibers 20 with cylindrical cross-sectional profiles (as depicted in FIG 2A, reference no. 20). However, the novel design of the fibers 22 shown in FIG. 2B uses a non-circular cross section to improve contaminant holding and coalescing performance. In the embodiment of FIG. 2B, the fibers 22 have a trilobal cross section where three lobes 24 extend from a central portion 26 of the fiber 22. The lobes 24 may all be uniform in size, shape, and orientation, or the lobes may be irregular in size, shape, and orientation. In addition, the fibers 22 can have a variety of regular and irregular cross sections. While the depicted embodiment utilizes a trilobal cross section 22, any number of lobes can be used, including four or more lobes, as desired.

In FIG. 2C, the filter cartridge 10 utilizes a combination of the fibers 20 with circular cross sections and fibers 22 with non-circular cross sections. In the preferred embodiment, the bicomponent fibers comprise a circular cross section 20 and the staple fibers include a subset of fibers with circular cross section 20 and a subset of fibers with non-circular cross sections 22. In the preferred embodiment, the staple fibers with non-circular cross sections 22 have a trilobal configuration. However, other embodiments within the scope of this disclosure may include staple fibers with non-circular cross sections 22 of several different sizes, shapes, and cross sections.

In the embodiment of FIG. 2C, a combination of bicomponent and staple fibers are mixed and laid into flat sheet media (or "mat"). In one embodiment, the filter cartridge may include four layers of flat sheet media. Each flat sheet media has a thickness of about 1.5 mm to 2.0 mm and an average weight of approximately 170 gsm (grams per square meter). However, other embodiments within the scope of this disclosure may include, one, two, three, four, five, six, seven, eight, nine, ten, etc. layers of flat sheet media in order to achieve the desired functionality. The flat sheet media are secured by a needle punching process to intertwine the fibers without the addition of heat (thereby avoiding an initial activation of the low melt bicomponent fiber sheath). The intertwined, needle punched fibers form a flat sheet media having a non-homogenous mixture of bicomponent and staple fibers (i.e., "random lattice").

In the preferred embodiment of the present invention, staple fibers with a non-circular cross section 22 comprise approximately 10-20% of the random lattice, the bicomponent fibers with a circular cross section 20 comprise about 60% of the random lattice, and the remaining staple fibers with a circular cross section 20 comprise approximately 20-30% of the random lattice. In the preferred embodiment of the present invention, the staple fibers having a non-circular cross section 22 are trilobal fibers.

Each layer of flat sheet media is comprised of a particular media grade, composition, or mixture of fibers ("Fiber Recipe(s)"). Examples of preferred Fiber Recipes for use in flat sheet media are depicted below:

**Table 1. Recipe 1**

| **% of Composition** | **Fiber** |
|---|---|
| 60% | 3 Denier Bicomponent Fiber |
| 30% | 1.4 Denier Staple Fiber |
| 10% | 6 Denier Trilobal Staple Fiber |

**Table 2. Recipe 2**

| **% of Composition** | **Fiber** |
|---|---|
| 60% | 3 Denier Bicomponent Fiber |
| 30% | 6 Denier Staple Fiber |
| 10% | 6 Denier Trilobal Staple Fiber |

**Table 3. Recipe 3**

| **% of Composition** | **Fiber** |
|---|---|
| 60% | 3 Denier Bicomponent Fiber |
| 20% | 1.4 Denier Staple Fiber |
| 20% | 6 Denier Trilobal Staple Fiber |

**Table 4. Recipe 4**

| **% of Composition** | **Fiber** |
|---|---|
| 60% | 3 Denier Bicomponent Fiber |
| 30% | 15 Denier Staple Fiber |
| 10% | 6 Denier Trilobal Staple Fiber |

**Table 5. Recipe 5**

| **% of Composition** | **Fiber** |
|---|---|
| 60% | 4 Denier Bicomponent Fiber |
| 20% | 15 Denier Staple Fiber |
| 10% | 45 Denier Staple Fiber |
| 10% | 6 Denier Trilobal Staple Fiber |

The above identified embodiments are preferred Fiber Recipes (or compositions) for use as layer(s) of flat sheet media which may be used to form a filter cartridge. However, other embodiments within the scope of this disclosure may include different compositions of bicomponent fibers and staple fibers of various cross sections.

FIG. 3A depicts the plurality of fibers 20, 22 arranged into a random lattice before the fibers 20, 22 have been thermally bonded. FIG. 3B depicts a plurality of filter media fibers 20, 22 arranged into a random lattice after the fibers 20, 22 have been thermally bonded together.

As shown in FIGs. 3A and 3B, the random lattice comprises a series of gaps between the fibers 20, 22 (i.e., "voids"). These voids are empty spaces (i.e., "void spaces") through which objects such as liquids or gases may pass without obstruction. The series of voids define a means for liquids and gases to pass from one side of the layer 30 of filtration media to the other side of the layer 30 of filtration media. Because the fibers 20, 22 have been mixed into a random lattice, the pathway between both ends of the layer 30 of filtration media includes a series of randomized voids and void spaces which serve as semi-permeable paths for liquids and gases (i.e., a "tortuous pass").

In a preferred embodiment of a filter cartridge, particles of less than 0.3 microns can easily pass through the tortuous pass. Particles of 0.3 microns and greater are captured in the void spaces of the random lattice, removing the contaminants from the liquid or gas as the liquid or gas passes through the tortuous pass. However, various filter cartridges may be created and optimized for the purpose of filtering contaminants of different sizes such as 1 micron particles, 5 micron particles, 10 micron particles, 25 micron particles, 45 micron particles, etc.

The preferred embodiment of the present invention is an improvement over the prior art as the composition of trilobal staple fibers 22, circular staple fibers 20 and bicomponent fibers 20 improves particle capture and increases the overall efficacy of the filter cartridge 10. The mixture of circular cross section 20 and trilobal cross section 22 fibers have significant advantages. For example, the trilobal cross section 22 enables an optimized random lattice that increases void spaces between each fiber 20, 22 to allow for capture of contaminants in liquid or solid form as well as increased pathways for gas flow throughout. These advantages may lead to improved contaminant holding, removal efficiency, coalescing performance, and airflow through the filter cartridge 10.

The effectiveness of each filter cartridge depends on the Fiber Recipes (or compositions) of various layers of flat sheet media used. Several preferred embodiments of filter cartridges are depicted below:

**Table 6. Composition and Arrangements of Preferred Filter Cartridge Embodiments**

| **Gas Filters** | |
|---|---|
| **Filters** | **Arrangement of Layers** |
| Embodiment A | Micro-glass Layer, Recipe 1, Recipe 2, Recipe 3 |
| Embodiment B | Micro-glass Layer, Recipe 1, Recipe 2, Recipe 3 |
| Embodiment C | Recipe 1, Recipe 2, Recipe 3, Recipe 4 |

| **Liquid Filters** | |
|---|---|
| **Filters** | **Arrangement of Layers** |
| Embodiment D | Recipe 1, Recipe 1, Recipe 1, Recipe 1 |
| Embodiment E | Recipe 1, Recipe 2, Recipe 3, Recipe 4 |
| Embodiment F | Recipe 4, Recipe 4, Recipe 4, Recipe 4 |
| Embodiment G | Recipe 5, Recipe 5, Recipe 5, Recipe 5 |

As depicted in Table 6 above, Embodiment A is a gas filter comprised of three layers of flat sheet media and a micro-glass material. The micro-glass material comprises the inner layer, Recipe 1 comprises the second layer, Recipe 2 comprises the third layer, and Recipe 3 comprises the outer layer of Embodiment A. The flow direction of Embodiment A is from inside to outside. In other words, the gas first makes contact with the filter ("upstream") at the inner layer, proceeds through each layer of the filter and exits the filter ("downstream") at the outer layer.

Embodiment B is a gas filter comprised of three layers of flat sheet media and a micro-glass material. The micro-glass material comprises the inner layer, Recipe 1 comprises the second layer, Recipe 2 comprises the third layer, and Recipe 3 comprises the outer layer of Embodiment B. The flow direction of Embodiment B is from inside to outside. In other words, the gas flows upstream at the inner layer and the gas flows downstream at the outer layer.

The micro-glass material of Embodiments A and B forms the inner layer (or core) of the filter cartridge but is not thermally bonded to the layers of filtration media. With regard to Embodiment A, the micro-glass material is optimized to filter 0.5 micron particles. With regard to Embodiment B, the micro-glass material is optimized to filter 0.3 micron particles. Embodiment C is a gas filter comprised of four layers of flat sheet media. Recipe 1 comprises the inner layer, Recipe 2 comprises the second layer, Recipe 3 comprises the third layer, and Recipe 4 comprises the outer layer. The flow direction of Embodiment C is from outside to inside. In other words, the gas flows upstream at the outer layer and the gas flows downstream at the inner layer.

Embodiment D is a liquid filter comprised of four layers of flat sheet media. Each of the four layers of Embodiment D are comprised of Recipe 1. The filter cartridge of Embodiment D is optimized to filter micron particles between 1 and 5 microns. Embodiment E is a liquid filter comprised of four layers of flat sheet media. Recipe 1 comprises the inner layer, Recipe 2 comprises the second layer, Recipe 3 comprises the third layer, and Recipe 4 comprises the outer layer. The flow direction of Embodiment E is from inside to outside. In other words, the liquid flows upstream at the inner layer and the liquid flows downstream at the outer layer. The filter cartridge of Embodiment E is optimized to filter micron particles of around 10 microns.

Embodiment F is a liquid filter comprised of four layers of flat sheet media. Each of the four layers of Embodiment F are comprised of Recipe 4. The filter cartridge of Embodiment F is optimized to filter micron particles of between 25 and 40 microns. Embodiment G is a liquid filter comprised of four layers of flat sheet media. Each of the four layers of Embodiment G are comprised of Recipe 5. The filter cartridge of Embodiment G is optimized to filter micron particles of around 75 microns.

While the filter cartridges of Embodiments A-G are optimized to capture and filter contaminants of various particle sizes, such filter cartridges are not restricted to use in filtering micron particles for which they are optimized.

Embodiments A-G are preferred embodiments of the present invention. Other embodiments within the scope of this disclosure may include filter cartridges where the arrangement of layers of flat sheet media are independent of direction flow. However, in other embodiments, the arrangement of layers can be dependent on flow direction in order to achieve a desired function.

In addition, alternative combinations of the Fiber Recipes and layers of flat sheet media may be created for additional intended purposes. For instance, an alternative arrangement of Fiber Recipes and layers of flat sheet media may be used to optimize filtration of 15 micron particles.

The filter cartridge of the present invention have an increased dirt holding capacity in comparison to other comparable filters in the field ("Prior Art"). Dirt holding capacity is defined as the total amount of contaminant that the filter cartridge can hold before a replacement filter cartridge is required.

Based on product testing (depicted below), the filter cartridges of the present invention have a clear improvement over the filter cartridges of comparable products in the field:

**Table 7. Comparison of Dirt Holding Capacity between Prior Art and Present Invention Table 7 depicts test results for various filter cartridges which are optimized for capturing four different particle sizes. The first column identifies the average particle size used in the test. Each row identifies the dirt holding capacity of the corresponding filter optimized to capture contaminants of the identified particle sizes (i.e., 1 micron, 5 microns, etc.). As shown in the table above, the embodiments of the present invention are able to capture a significantly greater amount of particles (by mass in grams) per 10 inches of filter cartridge across all four particle sizes than the Prior Art filter products.**

| **Particle Size** | **Prior Art** | **Present Invention** |
|---|---|---|
| | Dirt Holding Capacity | |
| 1 micron | 10 g/10 in. | 60 g/10 in. (Embodiment D) |
| 5 microns | 40 g/10 in. | 60 g/10 in. (Embodiment D) |
| 10 microns | 25 g/10 in. | 89.4 g/10 in. (Embodiment E) |
| 25 microns | 30 g/10 in. | 90 g/10 in. (Embodiment F) |

Further, the filter cartridge of the present invention has a greatly increased collapse strength in comparison to leading competitors in the field. The collapse rating is defined as the differential pressure required to break, disable, or collapse the filter cartridge. The collapse rating of the present invention is greater than or equal to 30 psid (pounds per square inch, differential), with an average collapse pressure of between 30-36 psid.

The improved collapse rating of the present invention was an unlikely improvement on the Prior Art. It was expected that the use of trilobal fibers 22 would increase the void space between fibers 20, 22 and the increased void space would result in a weaker filter. However, the filter cartridge of the present invention improved upon similar products in the field in both void space and collapse rating.

The improved collapse rating of the present invention also allows for an improved flow capacity across the filter cartridge. Flow capacity is defined as the maximum flow rate across a filter before the filter cartridge is damaged or collapsed. The flow of gas or liquids across a filter generates both upstream and downstream pressure. The upstream pressure refers to the pressure applied to the filter from the side of the pre-filtered gas or liquid. The downstream pressure refers to the pressure applied to the filter from the side of the filtered gas or liquid. As flow rate increases, both upstream and downstream pressures applied to the filter increase. The subtraction of downstream pressure from upstream pressure is the differential pressure applied to the filter.

Therefore, flow capacity depends on the maximum differential pressure that a filter can withstand (collapse rating). In view of the present invention's improved collapse rating, the flow capacity of the present invention is likewise improved over the Prior Art.

The tables below depict differential pressures applied on various filter cartridges at several flow rates for both Prior Art filters and the present invention filter cartridge:

**Table 8. Prior Art Filter Flow Capacity in View of Differential Pressure**

| **Prior Art Filter Cartridge** | | | | | | |
|---|---|---|---|---|---|---|
| Particle Size / Filter Type: | 2µm | 5µm | 10µm | 15µm | 20µm | 40µm |
| Flow (GPM) | Differential Pressure (PSID) | | | | | |
| 1 | 1.5 | 1 | 0.5 | 0.25 | 0.25 | 01. |
| 2 | 3 | 2 | 2 | 0.5 | 0.5 | 0.2 |
| 3 | 4 | 3.5 | 2.75 | 0.5 | 0.5 | 0.4 |
| 4 | 6 | 5 | 4 | 0.75 | 0.75 | 0.5 |
| 6 | | | | 1.75 | 1.75 | 1.25 |
| 8 | | | | 2.5 | 2.25 | 2.25 |
| 10 | | | | 3.5 | 3.25 | 3.1 |
| 12 | | | | 4.5 | 4.25 | 4.25 |
| 14 | | | | 5.5 | 5.25 | 5.25 |

**Table 9. Present Invention Filter Flow Capacity in View of Differential Pressure**

| **Present invention Filter Cartridge** | | | | | |
|---|---|---|---|---|---|
| Particle Size: | 1µm | 5µm | 10µm | 25µm | 40µm |
| Filter Type: | Embodiment D | | Embodiment E | Embodiment F | |
| Flow (GPM) | Differential Pressure (PSID) | | | | |
| 1 | 0 | 0 | 0 | 0 | 0 |
| 2 | 0 | 0 | 0 | 0 | 0 |
| 3 | 0 | 0 | 0 | 0 | 0 |
| 4 | 0 | 0 | 0 | 0 | 0 |
| 6 | 0.5 | 0.5 | 0.25 | 0.75 | 0.25 |
| 8 | 1.25 | 1 | 0.5 | 1.5 | 1 |
| 10 | 2 | 1.75 | 1 | 1.75 | 1.75 |
| 12 | 2.5 | 2.25 | 1.5 | 2 | 2 |
| 14 | 2.75 | 2.5 | 2 | 2.5 | 2.5 |

Tables 8 and 9 identify a flow rate (in gallons per minute) and the corresponding differential pressure (in pounds per square inch, differential) for several different filters. In Table 8, the Prior Art filters are identified by the particle size of contaminant to be captured. In Table 9, embodiments of the present invention and identified in the third row. As depicted above, the pressure differential of the present invention is significantly lower at higher flow rates when compared to the Prior Art. Therefore, it follows that the present invention is able to operate at higher flow rates with a lower risk of the filter collapsing.

The measurements from Tables 8 and 9 were taken early in the life cycle of the respective filters ("starting pressure differential"). As a filter gathers contaminant, the differential pressure will slowly increase and the filter will eventually fail or collapse. Therefore, the lower starting pressure differential of the present invention is indicative of a longer lasting filter cartridge. Because the pressure differential begins at a lower level, the amount of time required for the pressure differential to reach the present invention's collapse rating is longer than the Prior Art filters.

The filter cartridge has an improved or comparable efficiency to the filter cartridges sold in the field. Efficiency refers to the capability of the filter to collect and remove contaminants from the gas or vapor passing through the filter. Specifically, the efficiency identifies the percentage of contaminants collected by the filter over a set period of time. Table 10 depicts testing data of particle removal efficiency by percentage for gas filters. A comparison of efficiency between the embodiments of the present invention and Prior Art is depicted below:

**Table 10. Efficiency of Prior Art Filters in Comparison to Present Invention Filters**

| | 1 min | 15 min | 30 min | 45 min | 60 min | Avg |
|---|---|---|---|---|---|---|
| Prior Art X | 98.936 5 | 99.252 | 99.264 5 | 99.243 | 99.206 | 99.180 4 |
| Embodime nt A | 99.263 | 99.442 | 99.716 | 99.216 | 99.052 | 99.337 8 |
| Prior Art Y | 100 | 99.987 | 99.976 | 99.979 5 | 99.978 5 | 99.984 2 |
| Embodime nt B | 99.965 | 99.945 | 99.935 | 99.94 | 99.94 | 99.945 |
| Prior Art Z | 98.527 | 98.452 5 | 98.760 5 | 99.087 | 99.169 5 | 98.799 3 |

Table 10 depicts the percentage of 0.3 micron particles filtered from gas over a period of time. It was previously understood that an increase in void space would result in reduced efficiency, as more contaminants would be able to traverse the tortuous pass of the random lattice. However, even though the filter cartridge of the present invention includes greater void space, the efficiency of the present invention is still as effective, if not more effective than the Prior Art.

The filter cartridge 10 of FIG. 4 may be manufactured in a variety of ways known in the art and as further described in U.S. Patent No. 5,893,956, which is incorporated by reference herein. Typically, the filter cartridge 10 is composed of multiple layers 30 of non-woven filtration media (such as shown in FIGs. 3A and 3B) with each layer containing a plurality of fibers 20 or 22 that are bonded together and then arranged in a spirally wound manner, such as shown in FIG. 4. The layers 30 can be bonded together in a variety of ways, including but not limited to adhesives, resin, chemical bonding agents, sintering, lamination, or other similar methods. While in this embodiment, the layers 30 are composed of non-woven filtration media; they may also be made of other materials, including but not limited to woven mesh and membrane materials.

In the Prior Art, the individual fibers 20, 22 are thermally bonded together on a flat sheet media. After the individual fibers are thermally bonded, the flat sheet is mechanically wound into a spiral shape to form a cylindrical profile by using the machine depicted in FIG. 4 of U.S. Patent No. 5,893,956, which results in a profile similar to that of the filter cartridge 10 shown in FIG. 1. Multiple flat sheets, each with their own set of individual fibers, may be layered together to create a filter cartridge 10. This standard manufacturing process, and in particular the mechanical winding of the flat sheet media, imparts unwanted stress and strain on the thermally bound fibers as the fibers naturally want to revert back to their original, unwound state. This unwanted stress decreases the durability and rigidity of the final filter cartridge 10.

To reduce or eliminate the unwanted stresses described above, the present invention may be manufactured in an alternative manner. In the present invention, the plurality of individual fibers 20, 22 are mixed and laid into "mats" or flat sheet media which are secured by a needle punching process to intertwine the fibers 20, 22 without the addition of heat, thereby preventing an initial activation of the low melt fiber sheath. This process retains the original integrity of the sheath and initial activation does not occur until the fiber mat is processed into a finished product. This preserves the ability to use 100% of the low melt sheath when producing the structural bonds of each layer of the filter cartridge 10. Other production means currently used in the art may use a fiber mat (or flat sheet media) that is "heat set" when laying the fibers, which results in initial bonds being made that must be broken and re-bonded during the winding process, resulting in less uniform and controlled bonding sites for the finished product.

After the fibers 20, 22 are secured by needle punching, the flat sheet media are fed into a winding process, which forms the final, desired cylindrical shape without imparting unwanted mechanical stress on the thermal bonds between the fibers. During the winding process, the fibers 20, 22 are compressed, heated, and bound. Compression is applied to the surface of the heated material as it is fed into a spiral winder to compress and bond the staple fiber with the molten pool created by the heated low melt fiber sheath. The amount of pressure applied to the fibers 20, 22 has a direct effect on the permeability of the bonded material. The winding process applies a pressure between 5-50 psi. In the preferred embodiment, the pressure is set between 20-25 psi.

Each layer of flat sheet media is wound together to form the filter cartridge 10 during the winding step. Each layer of flat sheet media is assigned to its own station having a means to apply the flat sheet media to a mandril. The first layer of flat sheet media is applied to the mandril. The second layer of flat sheet media is applied to the first layer of flat sheet media and so forth. Each layer is applied simultaneously (or near simultaneously). Other methods may be used to apply each layer of flat sheet media to the filter cartridge 10. In alternative methods, a single station may be used to apply each layer of flat sheet media or each layer of flat sheet media may be applied to the filter cartridge 10 at different times. During the winding process, a ceramic coated infrared heat source introduces heat to the plurality of fibers 20, 22 to melt the bicomponent fibers and produce bonding of the staple fibers. While the application of heat to melt fibers is common in the field, the heat source of the present invention is unique as its concave shape conforms to the shape of the filter cartridge and helps to introduce a less intense and more evenly distributed heat to the surface. The even distribution of heat is critical for proper bonding and permeability of the finished product. The ceramic coating of the heat source protects the operator from ultraviolet and infrared rays used to conduct heat. In the preferred method, the heat source is set to a temperature between 900 to 1400 degrees Fahrenheit. However, alternative temperatures may be used to bind the bicomponent fibers and staple fibers. The winding process varies in speed. Depending on the wall thickness and final inner and outer diameters of the filter cartridge 10, the final output speed of the winding process can vary from 2 to 4 linear feet of finished product per minute.

The above detailed description and the examples described therein have been presented for the purposes of illustration and description only and not by limitation. It is therefore contemplated that the present disclosure cover any and all modifications, variations or equivalents that fall within the spirit and scope of the basic underlying principles disclosed above and claimed herein.

## Claims

1. A filter cartridge for filter separators and dry gas filters, comprising:
a filtration media including a plurality of layers, wherein each layer is spirally wound about and along a longitudinal axis to define a cylindrical non-pleated profile, wherein each layer is defined by a non-woven,
needle-punched and thermal set mixture of a plurality of bicomponent fibers and a plurality of staple fibers,
wherein a subset of the staple fibers have a non-circular cross-section and comprise approximately 10-20% of the mixture, the bicomponent fibers comprise about 60% of the mixture, and the remaining staple fibers comprise approximately 20-30% of the mixture,
wherein the bicomponent fiber has an outer sheath with a melting temperature of approximately 230 degrees Fahrenheit and the staple fiber has a melting temperature of approximately 400 degrees Fahrenheit;
wherein each of the bicomponent fibers and the staple fibers has an average diameter of approximately 10-90 microns and an average length of approximately 1.5-2.0 inches;
wherein each layer has a thickness of about 1.5 mm to 2.0 mm and an average weight of approximately 170 gsm; and
the plurality of bicomponent fibers and staple fibers arranged into a random lattice,
wherein the plurality of bicomponent fibers and staple fibers define a series of voids, each of the voids defining a void space,
wherein the series of voids define a tortuous pass,
wherein the tortuous pass is permeable to liquid and solid particles less than 0.3 microns in size.

2. The filter cartridge of claim 1, wherein staple fibers comprising a non-circular cross section are trilobal fibers.

3. The filter cartridge of claim 1, wherein the filter cartridge is comprised of four layers of non-woven filtration media having an overall thickness of between 0.25 and 1.0 inches.

4. The filter cartridge of claim 1, wherein the bicomponent fibers are selected from a group consisting essentially of a 3 Denier Bicomponent fiber or a 4 Denier Bicomponent fiber.

5. The filter cartridge of claim 1, wherein the staple fibers comprising a non-circular cross section are comprised of 6 Denier Trilobal fibers.

6. The filter cartridge of claim 5, wherein the remaining staple fibers are selected from a group consisting essentially of a 1.4 Denier Staple fiber, a 6 Denier Staple fiber, a 15 Denier Staple fiber, and a 45 Denier Staple fiber.

7. The filter cartridge of claim 1, wherein the void spaces collect and capture liquid and solid particles of .3 microns or greater, the void spaces having a collective dirt holding capacity of about 60 to 90 g/10".

8. The filter cartridge of claim 1, wherein the filter cartridge has a pressure differential of less than 3 psid at a liquid flow rate of 14 gallons per minute.

9. The filter cartridge of claim 1, wherein the filter cartridge has a collapse rating of greater than 30 psid.

10. The filter cartridge of claim 1, wherein the filter cartridge has an efficiency of greater than 99% after one hour.

11. A filter cartridge for filter separators and dry gas filters, comprising:
a four-layered non-woven filtration media, wherein each layer of non-woven filtration media comprises a mixture of individual fibers, wherein
the mixture of individual fibers comprises:
a first subset of trilobal staple fibers; a second subset of round staple fibers; and a third subset of bicomponent fibers;
the first subset of trilobal staple fibers comprising about 10-20% of the mixture;
the second subset of round staple fibers comprising about 20-30% of the mixture;
the third subset of trilobal staple fibers comprising about 60% of the mixture;
each layer of non-woven filtration media having a thickness of about 1.5 mm to 2.0 mm and an average weight of 170 gsm;
each layer of non-woven filtration media being spirally wound about and along a longitudinal axis into a four-layered filter cartridge having a cylindrical non-pleated profile with a thickness of about .25 to 1.0 inches.

12. The filter cartridge of claim 11, wherein the average individual fiber diameter is between 10-90 microns in diameter and between 1.5 to 2.0 inches in length.

13. The filter cartridge of claim 12, wherein the first subset, second subset, and third subset of fibers are needle punched and bound together via a thermal process.

14. The filter cartridge of claim 13, wherein the melting temperature of the third subset of fibers is approximately 230 degrees Fahrenheit and the melting temperature of the staple fiber is approximately 400 degrees Fahrenheit.

15. The filter cartridge of claim 14, wherein the heat source used to bind the first subset, second subset, and third subset of fibers is set at a temperature of approximately 900 to 1400 degrees Fahrenheit.

16. The filter cartridge of claim 11, wherein the filter cartridge comprises a cross section through which a stream of gas or liquid is configured to pass through, and the plurality of individual fibers are configured to attract and capture liquid and solid contaminants as small as .3 microns in the stream as the stream passes through the cross section.
